Europäisches Patentamt

European Patent Office

Office européen des brevets

(19)

(11) **EP 0 432 038 B1**

(12) **FASCICULE DE BREVET EUROPEEN**

(45) Date de publication et mention
de la délivrance du brevet:
**08.05.1996  Bulletin 1996/19**

(51) Int Cl.⁶: **G11B 11/10**

(21) Numéro de dépôt: **90403455.0**

(22) Date de dépôt: **05.12.1990**

(54) **Procédé de préparation d'une mémoire magnétooptique**

Verfahren zur Herstellung eines magnetooptischen Speichers

Process for the preparation of a magnetooptical memory

(84) Etats contractants désignés:
**BE DE GB IT NL**

(30) Priorité: **06.12.1989  FR 8916117**

(43) Date de publication de la demande:
**12.06.1991  Bulletin 1991/24**

(73) Titulaire: **COMMISSARIAT A L'ENERGIE
ATOMIQUE
F-75015 Paris (FR)**

(72) Inventeurs:
• **Bechevet, Bernard
  F-38640 Claix (FR)**
• **Challeton, Didier
  F-38120 Saint Egrève (FR)**
• **Rolland, Bernard
  F-38240 Meylan (FR)**
• **Vallon, Bruno
  F-38100 Grenoble (FR)**

(74) Mandataire: **Poulin, Gérard et al
Société de Protection des Inventions
25, rue de Ponthieu
F-75008 Paris (FR)**

(56) Documents cités:
EP-A- 0 196 332          DE-A- 3 519 070
FR-A- 2 579 814          GB-A- 2 127 611
GB-A- 2 136 647          GB-A- 2 183 413

## Description

La présente invention se rapporte au domaine de la mise en mémoire d'informations sous forme binaire en vue de leur utilisation par les différents systèmes informatiques ou vidéo qui recourent à de telles mémoires.

On connaît, d'une façon générale, les mémoires dites magnétooptiques qui sont décrites par exemple dans les publications : "Amorphous transition metal-rare earth alloy films for magneto optic recording". Fred E. Luborsky, General Electric Corporate Research and development. Mat. res. soc. symp. Proc. Vol. 80, 1987, P. 375) et "Les Nouvelles Techniques de Stockage de Données" (Pour la Science Décembre 1987, p. 64).

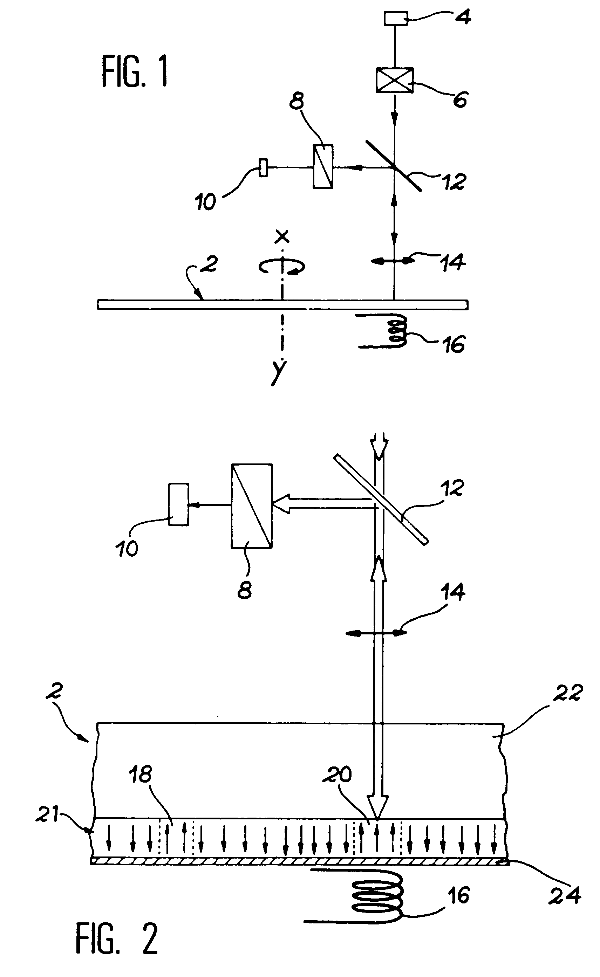

On commencera d'abord par rappeler le principe général connu de telles mémoires magnétooptiques en se référant aux schémas des figures 1 et 2, cette dernière représentant le disque magnétooptique de la figure 1 à plus grande échelle.

Le dispositif de la figure 1 comporte pour l'essentiel un disque de matière magnétooptique 2 susceptible de tourner autour de son axe vertical XY et un système de lecture/écriture comportant une diode laser 4, un polariseur 6, un analyseur 8 et un détecteur 10. Un miroir semi transparent 12, incliné à 45°, est interposé sur le trajet de la lumière qui se déplace depuis la diode laser 4 jusqu'à la surface du disque magnétooptique 2. Des lentilles de focalisation 14 sont également prévues au voisinage du disque magnétooptique 2. Ceci étant, l'écriture et la lecture du disque 2 sont faites à l'aide de la lumière de la diode laser 4 qui est susceptible d'écrire et de lire les données sur le support magnétique 2 effaçable et réinscriptible. A cet effet, et pour l'écriture, une bobine de champ magnétique 16 est également prévue sous le disque 2 pour soumettre ce dernier à un champ magnétique intense d'axe vertical, c'est-à-dire ici perpendiculaire au plan du disque 2. Le matériau magnétique constituant le disque 2 a un champ coercitif très intense à la température ambiante, mais diminuant rapidement à haute température. Lorsque par conséquent, sous l'action du faisceau laser émis par la diode 4, un domaine d'écriture du disque 2 est fortement chauffé, ce champ coercitif diminue fortement dans ce domaine de sorte que le champ magnétique émis par la bobine 16 et auquel le disque est soumis, permet de polariser magnétiquement la partie chauffée et de donner au domaine en question une direction, perpendiculaire à la surface du disque 2, mais de direction imposée et connue. On conçoit donc que si l'on part d'un disque magnétooptique préalablement aimanté dans une direction uniforme, perpendiculaire à la surface, (fig. 2) la mise en oeuvre de l'appareil schématique de la figure 1 permette d'inscrire côte à côte des domaines magnétisés dans un sens perpendiculaire au disque 2, mais dont l'aimantation est tantôt dirigée vers la face inférieure et tantôt dirigée vers la face supérieure (18 et 20, fig. 2). C'est ainsi que l'on réalise l'écriture des deux digits binaires 0 et 1 sur la surface du disque 2. Sur la figure 2, le support 22 est en verre et une couche réfléchissante 24 complète la structure du disque à mémoire optique.

Pour la lecture de ce disque, on recourt soit à l'effet connu sous le nom d'effet Kerr, soit à l'effet Faraday, c'est-à-dire que l'on observe chacun des domaines à l'aide du système de lentilles 14 et de miroir semi-transparent 12 en recherchant à l'aide de l'analyseur 8 et du détecteur 10 si le plan de polarisation auquel la lumière incidente a été assujettie par le polariseur 6 a tourné ou non, et dans quel sens, dans le faisceau réfléchi. En détectant ainsi les rotations du plan de polarisation du rayonnement réfléchi sur la couche (effet Kerr) ou réfléchi après traversée de la couche (effet Faraday), on détermine pour chaque domaine examiné s'il correspond à l'inscription d'un digit binaire 0 ou d'un digit binaire 1.

Par rapport aux mémoires de stockage d'informations à l'aide de matériaux magnétiques tels que $Cr_2O_3$, $Fe_2O_3$, FeNi etc.. , les mémoires optiques présentent un certain nombre de caractéristiques qui les rendent plus performantes et par conséquent plus séduisantes. Parmi ces performances, on peut citer une capacité de stockage au moins dix fois supérieure à celle des mémoires magnétiques, une lecture optique facile et une tête de lecture relativement éloignée du disque (de l'ordre du millimètre par exemple) ce qui diminue de façon considérable le risque de détérioration de la surface des mémoires qui existait avec les mémoires magnétiques antérieures. Par ailleurs, les mémoires optiques sont relativement insensibles aux poussières et peuvent être fabriquées sur des disques ou des supports amovibles.

La plupart des disques ou des mémoires magnétooptiques réalisés jusqu'à ce jour font appel à des matériaux amorphes, du type "terres rares-métaux de transition", comme par exemple le composé Gd-Tb-Fe.

La demanderesse a trouvé qu'il était possible d'augmenter encore les performances des mémoires magnétooptiques en utilisant comme matériau sensible des oxydes (grenats ferrimagnétiques, hexaferrites, ferrites spinelles) à la condition toutefois qu'ils soient déposés sur le support sous forme cristalline. Dans ces conditions, les oxydes précédents présentent les avantages suivants :

- ils ont une très bonne résistance chimique, alors que les métalliques amorphes sont oxydables ;
- leurs propriétés magnétooptiques sont supérieures (la rotation Faraday est supérieure à $5.10^6$ degrés de rotation par mètre de couche sensible traversée) ;
- On peut également les utiliser avec des longueurs d'ondes plus petites et obtenir par conséquent une densité d'enregistrement plus grande. Il est facile, par exemple, de travailler avec de telles mémoires à l'aide d'une lumière de longueur d'onde de 500 nanomètres.

Enfin, leur solidité n'implique pas la présence d'une couche de protection.

Bien entendu toutefois, la réalisation de telles mémoires à oxyde cristallisé dont la température de cristallisation est très élevée ($T_c > 500°C$) pose le problème de la compatibilité du support qui doit, pendant le temps de chauffage nécessaire pour réaliser la cristallisation, résister à des températures de cet ordre.

Le document DE-A-3 519 070 décrit une structure pour l'inscription de données magnétooptiques, pourvue d'une piste de guidage pour le faisceau laser d'inscription. Cette structure est réalisée sur un support résistant aux températures élevées et une couche d'isolation thermique peut être prévue. La couche sensible peut être réalisée en oxyde métallique et cristallisée par un traitement thermique à une température de 600 à 650°C pendant une durée de deux heures.

La présente invention a précisément pour objet un procédé de préparation de telles mémoires magnétooptiques qui permet, à l'aide de moyens simples à mettre en oeuvre, de résoudre le problème précédent et d'utiliser, notamment, des supports en verre ordinaire ne résistant pas à des températures élevées.

Ce procédé de préparation d'une mémoire magnétooptique comportant sur un support (22) ne résistant pas à des temperatures élevées, tel que verre, métal ou matière plastique, une couche sensible plane (21) de matériau magnétooptique destinée à recevoir en chaque point l'inscription de l'un des deux digits binaires 0 et 1 sous la forme de petits domaines juxtaposés et aimantés perpendiculairement au plan de la couche, dans l'une des deux directions possibles par rapport à celui-ci, au moins une couche réfléchissante (28) et/ou une couche constituant écran thermique (30) étant interposée(s) entre le support (22) et la couche sensible (21), la couche sensible (21) étant constituée par dépôt par pulvérisation cathodique ou autre d'un oxyde magnétique choisi dans le groupe comprenant les ferrites spinelles, les hexaferrites et les grenats ferrimagnétiques, le dépôt précédent étant suivi d'une cristallisation de la partie amorphe à l'aide d'un recuit, rapide de l'ordre de quelques secondes à une température comprise entre 600°C et 650°C.

Le moyen essentiel du procédé objet de la présente demande consiste à prévoir une protection thermique de ce support consistant par exemple en une couche réflectrice métallique telle que Cr, Al, ou Ti, et en une couche d'écran thermique en $SiO_2$. Ainsi, l'opération de recuit rapide à une température de l'ordre de 650°C ou plus grâce à laquelle on s'assure que la totalité des oxydes magnétiques déposés par pulvérisation cathodique ou autres sont bien cristallisés n'a pas de conséquences néfastes sur le support de la mémoire, même s'il est fragile thermiquement. Il est avantageux d'effectuer ce recuit en quelques secondes à puissance modulée.

Selon l'invention, on peut encore améliorer les conditions thermiques du recuit rapide en plaçant le matériau magnétooptique sur une platine refroidie qui constitue alors un puits thermique susceptible d'absorber fortement une partie des calories développées par les lampes utilisées pour le recuit.

Selon une caractéristique importante de la présente invention, les ferrites spinelles utilisées pour constituer la couche sensible, sont de formule générale $A_xB_yFe_2O_4$, formule dans laquelle :

x+y=1 et

A et B sont choisis parmi les métaux suivants : Ni, Mn, Zn, Fe, Co, Cu, Mg et Li, et les composés substitués.

Selon une autre caractéristique du procédé, lorsque les oxydes utilisés pour la couche sensible sont des hexaferrites, celles-ci sont de formule générale $A_yA'_zB_xFe_{12-x}O_{19}$, formule dans laquelle :

y+z=1 et

A et A' sont choisis parmi les composés suivants : Ba, Sr, Bi, La, Pb, Sc

B est choisi parmi les métaux suivants : Co, Mn, Ti, Zn, Al, Cu, Ga, et les composés avec substitution du fer.

Enfin, lorsque les oxydes utilisés sont des grenats ferrimagnétiques, ils ont la formule générale $A_xB_yFe_{5-z}CzO_{12}$, formule dans laquelle :

x+y=3

A est une terre rare ou l'yttrium,

B est choisi parmi le Bi et le Ca,

C est choisi parmi les métaux suivants: Al, Ga, Si, Ge, Sc, Tl.

En se référant aux figures 3 à 5, on va décrire maintenant quelques exemples de modalités pratiques de mise en oeuvre du procédé, objet de l'invention, description qui sera faite à titre surtout illustratif et non limitatif, les figures précédentes représentant :

- la figure 3, une couche magnétooptique sur son substrat munie d'une couche réflectrice et d'une couche d'écran thermique ;
- la figure 4, un schéma d'une installation possible pour le chauffage rapide par lampe ;
- la figure 5, un programme de recuit rapide à puissance modulée.

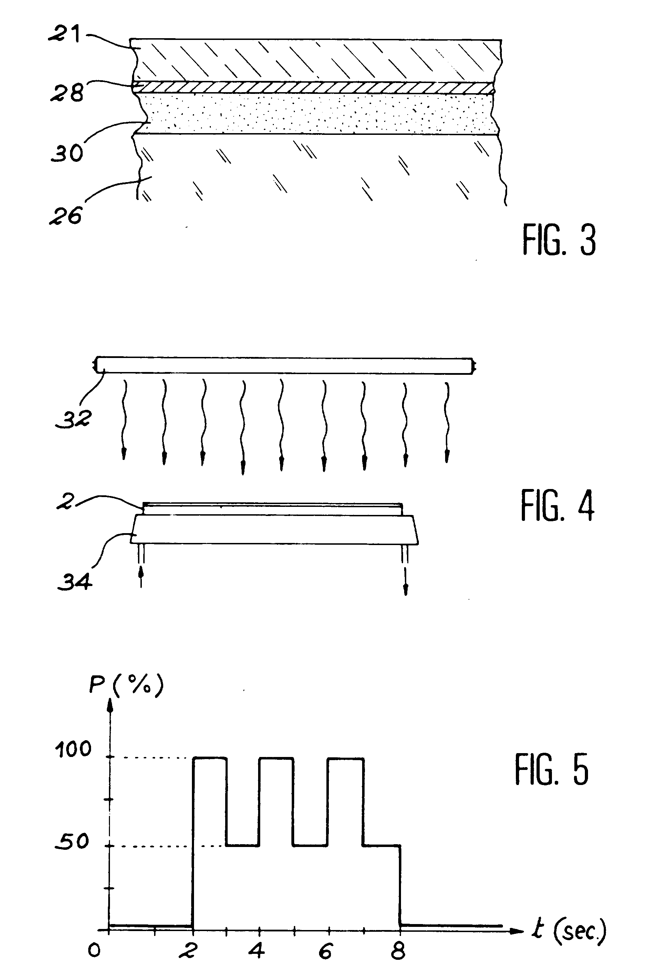

Sur la figure 3 on a représenté une couche magnétooptique 21 et son substrat de verre 26. Entre la couche magnétooptique 21 et le substrat 26 sont situées, conformément à l'invention, une couche réflectrice 28 en un métal choisi par exemple parmi le chrome, l'aluminium et le titane et en 30 une couche de silice $SiO_2$ constituant un écran thermique destiné à protéger le substrat 26 lors de l'opération de cristallisation des oxydes déposés.

La figure 4 représente schématiquement une installation de chauffage rapide par lampe pour effectuer l'opération de recuit. Sur cette figure, un disque magnétooptique 2 est éclairé par une rampe de lampes chauffantes 32 et situé sur une platine 34 refroidie par exemple par un courant d'eau et constituant un puits thermique qui permet d'absorber au fur et à mesure les calories issues de la rampe de lampes 32 qui ont traversé le disque magnétooptique 2.

Sur la figure 5, on a représenté un programme de recuit rapide à puissance modulée en fonction du temps. Le temps mesuré en secondes est indiqué en abscisses et la puissance thermique diffusée sur le disque magnétooptique est donné en ordonnées. Comme le montre la figure, les modulations imposées à la puissance se développent par créneaux de l'ordre de la seconde et au cours desquels cette dernière oscille de 100% à 50% de sa valeur maximum. Une telle modulation de la puissance permet généralement d'obtenir à une température supérieure à 500°C et le plus souvent voisine de 650°C, une cristallisation complète dans la masse des oxydes déposés par pulvérisation cathodique sans pour autant conduire à une destruction du support.

Selon l'invention, les disques à mémoire magnétooptique obtenus selon le procédé précédemment décrit, peuvent le cas échéant, recevoir une couche magnétooptique sur leurs deux faces.

En faisant varier les paramètres du recuit (puissance maximale, modulation de cette puissance etc...) on peut faire varier dans des proportions importantes et intéressantes, la cristallinité de la couche magnétooptique et notamment la taille des grains dans cette couche. En effet, plus les recuits sont rapides, plus la granulométrie de cette couche est faible, ce qui permet d'augmenter de façon importante dans certains cas les qualités magnétooptiques de celle-ci. D'autre part, il est possible en utilisant le procédé objet de l'invention d'obtenir des couches ayant une grande homogénéité.

A titre d'exemple, des mémoires magnétooptiques ont été fabriquées par le procédé objet de l'invention dans les conditions suivantes :

L'opération de pulvérisation cathodique était conduite soit en courant continu, soit en radiofréquence et les cibles étaient des disques de 100 mm de diamètre environ. Elles étaient constituées ainsi que la couche sensible, du composé $Bi_2D_yGa_{0,3}Fe_{4,7}O_{12}$. Le vide résiduel avant la pulvérisation atteignait $2.10^{-7}$ milli Torr et l'atmosphère était composée d'argon et d'oxygène dans un rapport de 8 à 1. La puissance de radiofréquence utilisée était de 3,8 $W/cm^2$ et la vitesse de dépôt de 0,75 micron/heure.

La température du substrat de dépôt pouvait être choisie à 300°C pour obtenir un dépôt amorphe.

L'opération de recuit rapide a été menée à l'aide d'un four à lampes à filament de tungstène ou à l'aide d'un faisceau laser à l'argon, le support reposant sur une plaque refroidie jouant le rôle de puits thermique. L'impulsion lumineuse avait une puissance modulée dans le temps selon le programme exposé sur la figure 5.

On a pu obtenir ainsi une cristallisation totale de la couche magnétooptique sans aucune destruction du verre constituant le substrat.

## Revendications

1. Procédé de préparation d'une mémoire magnétooptique comportant sur un support ne résistant pas à des températures élévées (22) tel que verre, métal ou matière plastique, une couche sensible plane (21) de matériau magnétooptique destinée à recevoir en chaque point l'inscription de l'un des deux digits binaires 0 et 1 sous la forme de petits domaines juxtaposés et aimantés perpendiculairement au plan de la couche, dans l'une des deux directions possibles par rapport à celui-ci, au moins une couche réfléchissante (28) et/ou une couche constituant écran thermique (30) étant interposée (s) entre le support (22) et la couche sensible (21), la couche sensible (21) étant constituée par dépôt par pulvérisation cathodique ou autre d'un oxyde magnétique choisi dans le groupe comprenant les ferrites spinelles, les hexaferrites et les grenats ferrimagnétiques, le dépôt précédent étant suivi d'une cristallisation de la partie amorphe à l'aide d'un recuit rapide de l'ordre de quelques secondes à une température comprise entre 600°C et 650°C.

2. Procédé de préparation d'une mémoire magnétooptique selon la revendication 1, caractérisé en ce que le recuit est un recuit rapide par lampes, la couche sensible de matériau magnétooptique étant disposée sur une platine refroidie (34) constituant un puits thermique pour absorber les calories.

3. Procédé de préparation d'une mémoire magnétooptique selon la revendication 2, caractérisé en ce que le recuit rapide a lieu en quelques secondes à puissance modulée.

4. Procédé de préparation d'une mémoire magnétooptique selon l'une quelconque des revendication 1 à 4 précédentes, caractérisé en ce que la couche réfléchissante (28) de protection du support (26) est en métal et en ce que la couche d'écran thermique est en silice.

## Patentansprüche

1. Verfahren zur Herstellung eines magnetooptischen Speichers, umfassend, auf einem gegen hohe Temperaturen nicht widerstandsfähigen Träger (22) wie Glas, Metall oder Kunststoff, eine ebene sensible Schicht (21) aus magnetooptischen Material, beschreibbar in jedem Punkt durch eine der beiden Binärziffern 0 und 1 in Form von kleinen Bereichen, die nebeneinanderliegen und senkrecht zu der Ebene der Schicht bezüglich dieser in einer der beiden möglichen Richtungen magnetisiert sind, wenigstens eine reflektierende Schicht (28) und/oder eine einen Wärmeschirm (30) bildende Schicht, eingefügt zwischen den Träger (22) und die sensible Schicht (21), wobei die sensible Schicht (21) erzeugt wird durch Sputtern oder ein anderes Abscheidungsverfahren eines magnetischen Oxids, gewählt aus der Gruppe, die die Spinellferrite, die Hexaferrite und die ferrimagnetischen Granate enthält, wobei der vorhergehenden Abscheidung eine Kristallisation des amorphen Teils folgt, mit Hilfe eines Schnelltemperns in der Größenordnung von einigen Sekunden mit einer zwischen 600°C und 650°C enthaltenen Temperatur.

2. Herstellungsverfahren eines magnetooptischen Speichers nach Anspruch 1, dadurch gekennzeichnet, daß das Tempern ein Schnelltempern mittels Lampen ist, wobei die sensible Schicht aus magnetooptischem Material auf einer gekühlten Platte (34) angeordnet ist, die eine Wärmesenke zum Absorbieren der Kalorien bildet.

3. Herstellungsverfahren eines magnetooptischen Speichers nach Anspruch 2, dadurch gekennzeichnet, daß das Schnelltempern innerhalb einiger Sekunden mit modulierter Leistung stattfindet.

4. Herstellungsverfahren eines magnetooptischen Speichers nach einem der vorangehenden Ansprüche 1 bis 3, dadurch gekennzeichnet, daß die reflektierende Schutzschicht (28) des Trägers (26) aus Metall ist, und dadurch, daß die Wärmeschildschicht aus Siliciumdioxid ist.

## Claims

1. Method for preparing a magnetooptic memory comprising on a support (22) not resisting high temperatures, such as a glass, metal or plastic support, a sensitive plain film (21) of a magnetooptic material intended to receive at each point the recording of one of the two binary digits 0 and 1 in the form of small domains juxtaposed and magnetized perpendicular to the plane of the film in one of two possible directions with respect to the latter, at least one reflecting film (28) and/or one film (30) constituting a thermic screen is placed between the support (22) and the sensitive film (21), the sensitive film (21) being constituted by the cathodic evaporation depositing or by other means of a magnetic oxide selected from hexaferrites and ferrimagnetic garnets, the preceding deposit being followed by a crystallization of the amorphous section with the aid of a fast annealing, lasting a few seconds at a temperature of between 600°C and 650°C.

2. Method for preparing a magnetooptic memory according to claim 1, characterized in that the annealing is a fast lamp annealing, the sensitive film of a magneto optic material being disposed on a cooled plate (34) constituting a thermic well so as to absorb the calories.

3. Method for preparing a magnetooptic memory according to claim 2, characterized in that the fast annealing takes place in several seconds at modulated power.

4. Method for preparing a magnetooptic memory according to any one of claims 1 to 4, characterized in that the reflecting film (28) for protecting the support (26) is a metal film and in that the thermic screen film is made of silica.

FIG. 1

FIG. 2

FIG. 3

FIG. 4

FIG. 5